# EUROPÄISCHE PATENTSCHRIFT

(11) **EP 2 218 924 B1**
(45) Veröffentlichungstag und Bekanntmachung des Hinweises auf die Patenterteilung: **06.03.2013**
(21) Anmeldenummer: 10151656.5
(22) Anmeldetag: 26.01.2010
(51) Int. Cl.: F16B 37/04, F16B 7/18

(54) **Befestigungsvorrichtung zur Anordnung an einer Montageschiene**
Fastening device for assembly to a fitting rail
Dispositif de fixation destiné à l'agencement sur un rail de montage

(30) Priorität: 11.02.2009 DE 102009000786
(43) Veröffentlichungstag der Anmeldung: 18.08.2010
(73) Patentinhaber: HILTI Aktiengesellschaft, 9494 Schaan (LI)
(72) Erfinder: Merhar, Thomas, 9494 Schaan (LI); Mugg, Peter, 6714 Nüziders (AT)
(74) Vertreter: Söllner, Oliver

(56) Entgegenhaltungen:
- EP-B1- 0 553 765
- DE-U1- 20 202 681
- US-A- 5 593 265

## Beschreibung

Die Erfindung betrifft eine Befestigungsvorrichtung zur Anordnung an einer Montageschiene, der im Oberbegriff des Patentanspruchs 1 genannten Art.

Im Gebiet der Haustechnik werden Schienensysteme eingesetzt, an denen Leitungen z. B. für Wasser-, Heizung-, Lüftung-, Klima- und/oder Elektroinstallationen einfach über entsprechende Befestigungsvorrichtungen, wie beispielsweise mit Rohrschellen und Schienenmuttern festlegbar sind. An Schienensystemen werden auch Vorrichtungen zur Abhängung von Bauteilen vorgesehen, deren Stangenelemente ebenfalls mit geeigneten Befestigungsvorrichtungen an den Schienensystemen festlegbar sind. Zum Verbinden mehrerer Schienenelemente kommen ebenfalls Befestigungsvorrichtungen zum Einsatz, die beispielsweise Winkelelemente als Anlageplatten aufweisen.

Für ein solches Schienensystem wird oftmals eine so genannte C-förmige Montageschiene verwendet, wie sie beispielsweise aus der DE 87 15 256 U1 bekannt ist. Der von der Montageschiene umschlossene Innenraum ist über eine entlang der Längserstreckung der Montageschiene verlaufende Montageöffnung von aussen her zugänglich, welche von Rändern seitlich begrenzt ist. Die Montageöffnung weist eine quer zu der Längserstreckung der Montageschiene verlaufende lichte Breite auf, die kleiner als die entsprechende Innenabmessung des Innenraums der Montageschiene ist.

Aus der EP 0 553 765 B1 ist eine Befestigungsvorrichtung zur Anordnung einer Leitung an einer C-förmigen Montageschiene bekannt. Die Befestigungsvorrichtung weist ein Hintergreifteil zum Einführen in die Montageöffnung und Hintergreifen von Rändern der Montageöffnung der Montageschiene auf, das einen Innengewindeabschnitt aufweist. Das Hintergreifteil weist eine Breite, die kleiner als die lichte Breite der Montageöffnung ist, und eine Länge auf, die grösser als die lichte Breite der Montageöffnung ist. Weiter weist die Befestigungsvorrichtung eine mit dem Hintergreifteil zusammenwirkende, eine Längsachse aufweisende Verspanneinrichtung in Form einer Spannschraube zum Verspannen der Befestigungsvorrichtung an der Montageschiene auf, wobei die Spannschraube über den Innengewindeabschnitt im Hintergreifteil mit diesem verbunden ist. Zudem ist eine Anlageplatte zur aussenseitigen Anlage an der Montageschiene vorgesehen, die eine Durchführöffnung für den Schaft der Spannschraube als Teil der Verspanneinrichtung aufweist. Zwischen der Anlageplatte und dem Hintergreifteil ist ein Federelement zur Vorspannung des Hintergreifteils in eine in Bezug auf die Längsachse der Verspanneinrichtung radiale Richtung angeordnet. Über eine Halteeinrichtung zwischen dem Hintergreifteil und der Anlageplatte ist das Hintergreifteil in der vorgespannten Stellung gehalten, welche der Einführstellung des Hintergreifteils zum Einführen in die Montageöffnung der Montageschiene entspricht. Die Halteeinrichtung umfasst Ausnehmungen an dem Hintergreifteil, die mit Vorsprüngen an der Anlageplatte zusammenwirken. Nach dem Einführen des Hintergreifteils in die Montageöffnung der Montageschiene wird die Halteeinrichtung durch axiales Versetzen der Spannschraube in Richtung der Anlageplatte gelöst, wobei das Hintergreifteil aufgrund der vorhandenen Vorspannung von dem Federelement aus der Einführstellung in eine die Ränder der Montageöffnung hintergreifende Hintergreifstellung überführt wird. Die Verdrehung des Hintergreifteils wird durch am Hintergreifteil vorgesehene Anschlagflächen begrenzt, welche an den einander zugewandten Innenseiten der Ränder der Montageöffnung anschlagen.

Nachteilig an der bekannten Lösung ist, dass diese Befestigungsvorrichtung auf eine spezielle Geometrie der Montageschiene, insbesondere auf die Geometrie der Montageöffnung abgestimmt sein muss, da ansonsten das Hintergreifteil überdrehen kann oder sich nach dem Auslösen der Halteeinrichtung nicht in einer idealen Ausrichtung zum Hintergreifen der Ränder der Montageöffnung befindet, in welcher die Befestigungsvorrichtung optimal an der Montageschiene verspannbar ist.

Aufgabe der Erfindung ist es, eine Befestigungsvorrichtung zu schaffen, die flexibler in Bezug auf die Montageschienengeometrie ist und bei der eine exakte Ausrichtung des Hintergreifteils zur Krafteinleitung in die Montageschiene im verspannten Zustand gewährleistet.

Die Aufgabe ist durch die Merkmale des unabhängigen Anspruchs gelöst. Vorteilhafte Weiterbildungen sind in den Unteransprüchen dargelegt.

Gemäss der Erfindung ist an der Anlageplatte zumindest ein Anschlagelement mit einer Anschlagsfläche zur Begrenzung der Verdrehbarkeit des Hintergreifteils vorgesehen.

Da mit dem zumindest einen Anschlagelement die maximale Verdrehbarkeit des Hintergreifteils definiert ist, ist die erfindungsgemässe Befestigungsvorrichtung weitgehend unabhängig von Herstellungstoleranzen der Montageschiene. Dabei wird die exakte Ausrichtung des Hintergreifteils nach dem Auslösen der Halteeinrichtung jederzeit gewährleistet. Vorteilhaft sind an einer Anlageplatte zwei einander diametral gegenüberliegende Anschlagelemente für das Hintergreifteil vorgesehen, welche in der Hintergreifstellung des Hintergreifteils an diesem an zwei einander diametral gegenüberliegenden Abschnitten anliegen und die korrekte Ausrichtung des Hintergreifteils zum Hintergreifen der Ränder der Montageschiene in vorteilhafter Weise sicherstellen.

Das Federelement ist vorteilhaft eine Schraubenfeder, deren Enden einerseits an der Anlageplatte und andererseits an dem Hintergreifteil festgelegt sind. Vorteilhaft ist das Federelement eine Torsions-Zugfeder, welche das Hintergreifteil nicht nur in eine Drehrichtung um die Längsachse der Verspanneinrichtung sondern auch in Richtung der Anlageplatte vorspannt. Damit ist die Befestigungsvorrichtung nach dem Auslösen der Halteeinrichtung hemmend, aber noch verschieblich an der Montageschiene vormontiert.

Vorzugsweise ragt das zumindest eine Anschlagelement von der dem Hintergreifteil zugewandten Anlageseite der Anlageplatte ab, womit eine besonders einfache konstruktive Ausgestaltung der Befestigungsvorrichtung ermöglicht wird. Die gesamte Breite des zumindest einen Anschlagelementes entspricht vorteilhaft maximal der lichten Breite der Montageöffnung, womit das zumindest eine Anschlagelement bei der Anordnung der Befestigungsvorrichtung zwischen die Ränder der Montageöffnung in den Innenraum der Montageschiene für eine flächige Anlage der Anlageplatte an der Aussenseite der Montageschiene eindringen kann.

Bevorzugt ist die Halteeinrichtung für das Hintergreifteil an dem Anschlagelement vorgesehen, womit das Anschlagelement gleichzeitig zur definierten Beabstandung des Hintergreifteils zur Anlageplatte dienen kann, was ein korrektes Einführen des Hintergreifteils in die Montageöffnung und ein anschliessendes Verdrehen des Hintergreifteils unter die freien Enden der Ränder der Montageöffnung vereinfacht. Ragt das zumindest eine Anschlagelement von der Anlageplatte ab, so ist die Halteeinrichtung vorteilhaft an dem freien Ende des zumindest einen Anschlagelementes vorgesehen. Die Halteeinrichtung umfasst beispielsweise eine Haltenocke, welche in eine Halteausnehmung zum Halten des Hintergreifteils in der vorgespannten Stellung eingreift.

Vorzugsweise ist zwischen der Halteeinrichtung und einem freien Ende des Anschlagelementes eine Führungskontur für das Hintergreifteil vorgesehen, wodurch das Hintergreifteil nach dem Lösen der Halteeinrichtung geführt in die Hintergreifstellung zum Hintergreifen der Ränder der Montageöffnung überführbar ist.

Bevorzugt ist an einer der Anlageplatte zugewandten Seite des Hintergreifteils ein erster zylinderförmiger Hülsenabschnitt und an einer dem Hintergreifteil zugewandten Anlageseite der Anlageplatte ein zweiter, die Durchführöffnung umgebender zylinderförmiger Hülsenabschnitt vorgesehen, wobei der erste Hülsenabschnitt und der zweite Hülsenabschnitt telskopierbar zueinander angeordnet sind und wobei das zumindest eine Anschlagelement am Hülsenabschnitt der Anlageplatte vorgesehen ist. Die ineinander gleitenden Hülsenabschnitte gewährleisten eine vorteilhafte Führung des Hintergreifteils relativ zur Anlageplatte. Vorteilhaft ist das Federelement zur Vorspannung des Hintergreifteils ausserhalb dieser Hülsenabschnitte angeordnet.

Vorzugsweise umfasst das Anschlagelement zumindest ein erstes Rastmittel zur Ausrichtung des Hintergreifteils in seiner Einführstellung und zumindest ein zweites Rastmittel zur Ausrichtung des Hintergreifteils in seiner Hintergreifstellung, wobei an dem Hintergreifteil zumindest ein Gegenrastmittel zum Einrasten in die Rastmittel entsprechend der Ausrichtung des Hintergreifteils vorgesehen ist. Das Rastmittel umfasst beispielsweise zwei zueinander beabstandete Einkerbungen oder Vertiefungen, welche einerseits die Einführstellung des Hintergreifteils und andererseits die Hintergreifstellung des Hintergreifteils definieren. Das Gegenrastmittel umfasst vorteilhaft Nasen oder Vorsprünge, welche entsprechend der Ausrichtung des Hintergreifteils relativ zur Anlageplatte beziehungsweise relativ zur Montageöffnung in die entsprechende Einkerbung oder Vertiefung eingreifen.

Ragt von der Anlageplatte und von dem Hintergreifteil jeweils ein Hülsenabschnitt ab, so ist das Rastmittel vorteilhaft von Ausnehmungen gebildet, die am freien Rand des Hülsenabschnitts der Anlageplatte angeordnet sind, und das Gegenrastmittel von einer Nase gebildet ist, die vorteilhaft nach radial innen, bei einem den Hülsenabschnitt der Anlageplatte umgreifenden Anordnung des Hülsenabschnitts des Hintergreifteils, oder nach radial aussen abragt, wenn der Hülsenabschnitt des Hintergreifteils von dem Hülsenabschnitt der Anlageplatte umgriffen wird.

Bevorzugt ist ein zweites Federelement zwischen einem Abschnitt der Verspanneinrichtung an ihrem dem Hintergreifteil abgewandten Ende und der Anlageplatte zur Federbeaufschlagung eines mit dem Hintergreifteil verbundenen Teils der Verspanneinrichtung in Richtung des dem Hintergreifteil abgewandten Endes vorgesehen, womit eine vorteilhafte Vorspannung des Hintergreifteils in Richtung der Anlageplatte gegeben ist. Das zweite Federelement ist vorteilhaft als Schraubenfeder ausgebildet, welche beispielsweise an einem Schraubenkopf oder einer radial abragenden Erweiterung an dem dem Hintergreifteil abgewandten Ende der Verspanneinrichtung angreift.

In einer vorteilhaften Ausführungsform sind das Federelement zwischen dem Hintergreifteil und der Anschlagplatte sowie das zweite Federelement zwischen dem dem Hintergreifteil abgewandten Ende der Verspanneinrichtung und der Anlageplatte als einteilige Federeinrichtung in Form einer Druck-Drehfeder ausgebildet. Der unterhalb der Anlageplatte angeordnete, dem Hintergreifteil zugewandte Abschnitt der einteiligen Federeinrichtung bildet dabei den Drehbereich und der oberhalb der Anlageplatte angeordnete, dem Hintergreifteil abgewandte Abschnitt bildet den Druckbereich der einteiligen Federeinrichtung aus.

Vorzugsweise ist das dem Hintergreifteil zugewandte Ende eines mit dem Hintergreifteil verbundenen Teils der Verspanneinrichtung mit einer Verliersicherung für das Hintergreifteil versehen. Die Verliersicherung ist beispielsweise durch eine Aufstauchung oder durch eine das entsprechende Ende des Teils der Verspanneinrichtung aufweitende Einkerbung gebildet. Umfasst die Verspanneinrichtung eine Spannschraube, so ist die Verliersicherung vorteilhaft am freien Ende des Schraubenschafts vorgesehen. Alternativ zu einer durch Verformung erzeugten Verliersicherung kann am Endbereich das entsprechenden Endes des Teils der Verspanneinrichtung eine z. B. den Aussendurchmesser vergrössernde Beschichtung oder Erhebung vorgesehen sein.

Bevorzugt weist die Verspanneinrichtung an ihrem dem Hintergreifteil abgewandten Ende eine Aufnahme für ein Stangenelement auf, womit die Befestigungsvorrichtung direkt als Anbindeteil für eine Schellenanbindung oder eine Abhängung an der Montageschiene dienen kann. Vorteilhaft ist in der Aufnahme ein Gewinde, z. B. ein Innengewinde vorgesehen, in welches ein zumindest bereichsweise mit einem Gewinde, z. B. einem Aussengewinde versehenes Stangenelement, wie eine Gewindestange, einschraubbar und lösbar festlegbar ist. Vorteilhaft ist die Aufnahme eine durchgängige Bohrung, welche sich über die gesamte Längserstreckung des entsprechenden Teils der Verspanneinrichtung erstreckt, womit ein grosser Bereich zur Justierung und Positionierung des Stangenelementes relativ zur Montageschiene vorhanden ist.

Vorzugsweise weist die Verspanneinrichtung an ihrem dem Hintergreifteil abgewandten Ende ein Drehmitnahmemittel zur axialen Justierung eines in der Aufnahme aufgenommenen Stangenelementes auf, womit das an der Befestigungsvorrichtung festgelegte Stangenelement relativ zur Montageschiene versetzbar ist, ohne dass zu diesem Zweck die an der Montageschiene angeordnete Befestigungsvorrichtung selbst gelöst werden muss. Vorteilhaft weist das Drehmitnahmemittel eine Sechskant-Aussenkontur für einen handelsüblichen Schlüssel zu Drehmomentübertragung auf.

Die Erfindung wird nachstehend anhand von Ausführungsbeispielen näher erläutert. Es zeigen:
- Fig. 1: Eine Befestigungsvorrichtung zum Verbinden zweier Montageschienen in einer Seitenansicht;
- Fig. 2: eine an einer Montageschiene angeordnete Befestigungsvorrichtung in einer Ansicht;
- Fig. 3: ein Hintergreifteil der in der Fig. 2 gezeigten Befestigungsvorrichtung in einer Aufsicht;
- Fig. 4: das Hintergreifteil gem. Fig. 3 in einer Seitenansicht;
- Fig. 5: einen Schnitt durch eine Anlageplatte der in der Fig. 2 gezeigten Befestigungsvorrichtung;
- Fig. 6: ein zweites Ausführungsbeispiel einer Befestigungsvorrichtung in einer Seitenansicht;
- Fig. 7A: eine Aufsicht auf das Hintergreifteil der Befestigungsvorrichtung gem. Fig. 6 in der Einführstellung;
- Fig. 7B: einen Schnitt mit Ansicht auf die Befestigungsvorrichtung gem. Fig. 6 mit dem Hintergreifteil in der Einführstellung;
- Fig. 8A: eine Aufsicht auf das Hintergreifteil der Befestigungsvorrichtung gem. Fig. 6 in der Hintergreifstellung;
- Fig. 8B: einen Schnitt mit Ansicht auf die Befestigungsvorrichtung gem. Fig. 6 mit dem Hintergreifteil in der Hintergreifstellung;
- Fig. 9: ein drittes Ausführungsbeispiel einer Befestigungsvorrichtung in einer Seitenansicht; und
- Fig. 10: die in der Fig. 8 dargestellte Befestigungsvorrichtung in einem Längsschnitt.

Grundsätzlich sind in den Figuren gleiche Teile mit den gleichen Bezugszeichen versehen.

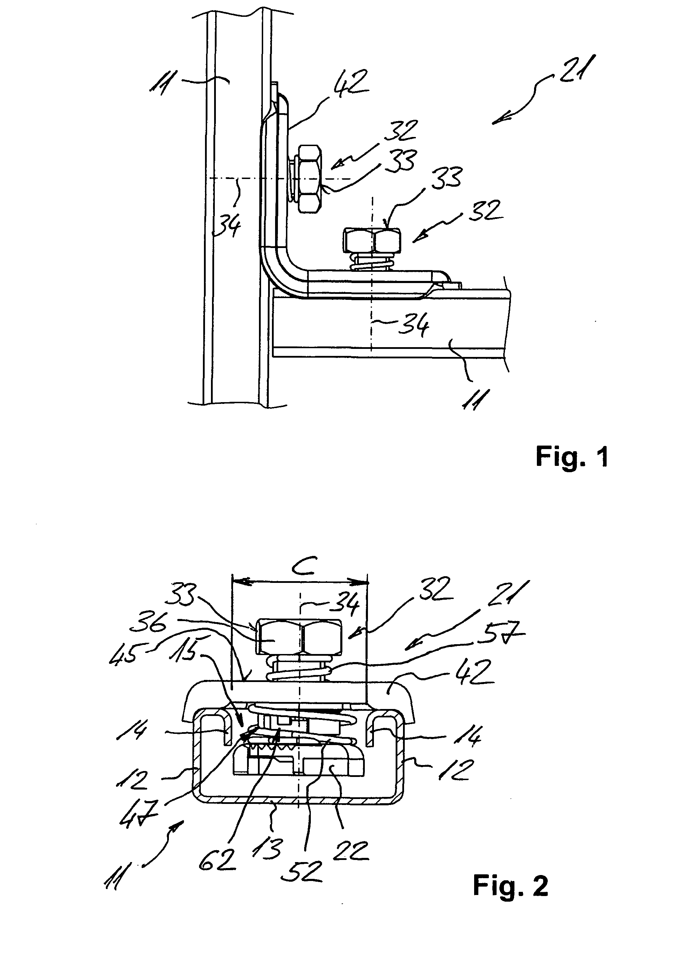

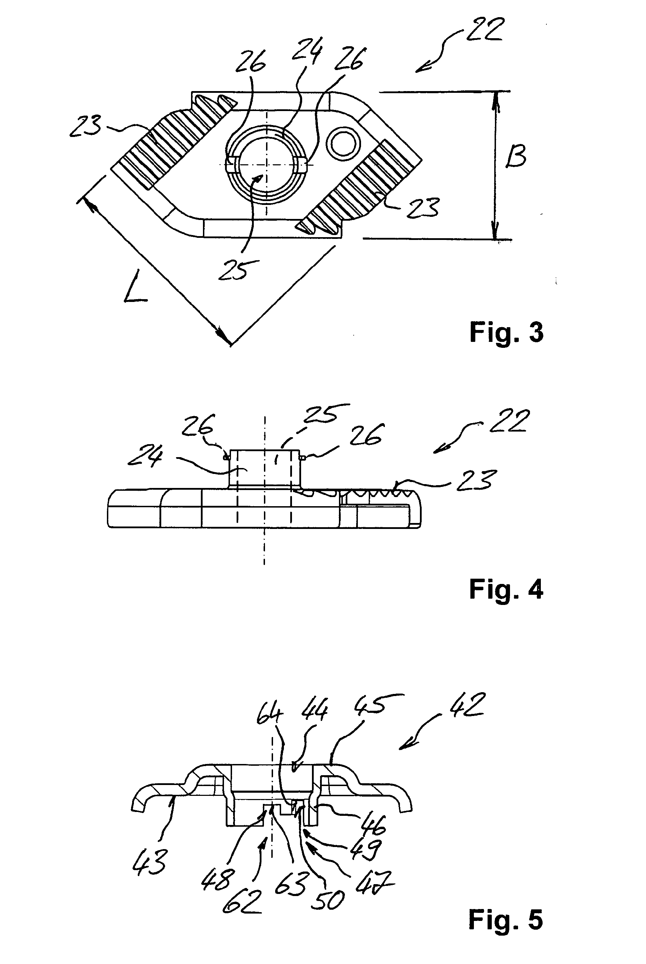

Die in den Figuren 1 bis 5 dargestellte Befestigungsvorrichtung 21 dient dem Verbinden zweier C-förmigen Montageschienen 11.

Die Montageschienen 11 weisen jeweils zwei einander gegenüberliegende Seitenwände 12, eine diese Seitenwände 12 verbindende Rückwand 13 sowie dieser Rückwand 13 gegenüberliegend eine von Rändern 14 begrenzte, in der Längserstreckung der Montageschiene 11 verlaufende Montageöffnung 15 auf. Die Montageöffnung 15 weist eine quer zu der Längserstreckung der Montageschiene 11 verlaufende lichte Breite C auf, welche durch die nach innen umgebogenen freien Enden der Ränder 14 definiert ist. Jede Montageschiene 11 umgibt einen Innenraum, der durch die Montageöffnung 15 von aussen her zugänglich ist.

Die Befestigungsvorrichtung 21 weist ein Hintergreifteil 22 mit einer Breite B, die kleiner als die lichte Breite C der Montageöffnung 15 in der Montageschiene 11 ist, und eine Länge L auf, die grösser als die lichte Breite C der Montageöffnung 15 in der Montageschiene 11 ist. An seinen Spannflächen 23 ist das Hintergreifteil 22 mit Zahnungen für einen verbesserten Eingriff mit den optional ebenfalls mit einer Zahnung versehenen freien Enden der Ränder 14 der Montageöffnung 15 versehen. Von der Seite des Hintergreifteils 22 mit den Spannflächen 23 ragt ein erster, zylinderförmiger Hülsenabschnitt 24 ab, der eine mit einem Innengewinde versehene, durchgängig ausgebildete Öffnung 25 zum Festlegen einer Spannschraube 33 als Verspanneinrichtung 32 an dem Hintergreifteil 22 ausbildet. Die mit dem Hintergreifteil 22 verbundene Spannschraube 33 weist eine Längsachse 34 auf und dient dem Verspannen der Befestigungsvorrichtung 21 an der Montageschiene 11. Von dem freien Rand des Hülsenabschnitts 24 ragen nach radial aussen zwei einander diametral gegenüberliegende Nasen als Gegenrastmittel 26 ab.

Weiter umfasst die Befestigungsvorrichtung 21 ein Winkelelement als Anlageplatte 42, die bei der Anordnung der Befestigungsvorrichtung 21 an der Montageschiene 11 mit ihrer Anlageseite 43 mit der, der Montageöffnung 15 benachbarten Aussenseite der Montageschiene 11 in Anlage kommt und diese somit stirnseitig beaufschlagt. Der Anlageseite 43 gegenüberliegend weist die Anlageplatte 42 eine Spannfläche 45 auf. Die Anlageplatte 42 ist weiter mit Durchführöffnungen 44 zur Durchführung des Schafts 35 der Spannschraube 33 versehen, wobei der Schaft 35 frei drehbar in diesen Durchführöffnungen 44 angeordnet ist. Von der im zusammengebauten Zustand der Befestigungsvorrichtung 21 dem Hintergreifteil 22 zugewandten Anlageseite 43 der Anlageplatte 42 ragt ein zweiter, die Durchführöffnung 44 umgebender zylinderförmiger Hülsenabschnitt 46 ab. Im zusammengebauten Zustand der Befestigungsvorrichtung 21 laufen der erste Hülsenabschnitt 24 am Hintergreifteil 22 und der zweite Hülsenabschnitt 46 der Anlageplatte 42 telskopierbar ineinander, so dass das Hintergreifteil 22 an der Anlageplatte 42 sicher geführt ist.

Zwischen der Anlageplatte 42 und dem Hintergreifteil 22 ist eine Torsions-Zug-Schraubenfeder als Federelement 52 angeordnet, welches das Hintergreifteil 22 in eine in Bezug auf die Längsachse 34 der Spannschraube radiale Richtung vorspannt.

Weiter ist eine Halteeinrichtung 62 zwischen dem Hintergreifteil 22 und der Anlageplatte 42 zum Halten des Hintergreifteils 22 in einer vorgespannten Stellung vorgesehen, welche der Einführstellung des Hintergreifteils 22 entspricht. Die Halteeinrichtung 62 ist einerseits von einer ersten Einkerbung 63, die gleichzeitig ein erstes Rastmittel 48 eines Anschlagelementes 47 zur Ausrichtung des Hintergreifteils 22 in seiner Einführstellung ausbildet, am freien Rand des zweiten Hülsenabschnitts 46 an der Anlageplatte 42 und andererseits von den Nasen als Gegenrastmittel 26 am ersten Hülsenabschnitt 24 des Hintergreifteils 22 gebildet. Das Anschlagelement 47 ragt von der dem Hintergreifteil 22 zugewandten Anlageseite 43 der Anlageplatte 42 ab. Die Anschlagsfläche 50 wird hier von dem Seitenrand der zweiten Einkerbung 64 ausgebildet, welche am freien Rand des zweiten Hülsenabschnitts 46, beabstandet zu dem ersten Rastmittel 48 als zweites Rastmittel 49 zur Ausrichtung des Hintergreifteils 22 in seiner Hintergreifstellung vorgesehen ist. Die zweite Einkerbung 64 weist eine Tiefe auf, die tiefer als die Tiefe der ersten Einkerbung 63 der Halteeinrichtung 62 bzw. des ersten Rastmittels 48 jeweils ausgehend vom freien Rand des zweiten Hülsenabschnitts 46 ist. Die Halteeinrichtung 62 für das Hintergreifteil 22 ist somit an dem Anschlagelement 48 vorgesehen. Diametral gegenüberliegend von dem Anschlagelement 47 ist ein zweites, hier nicht dargestelltes Anschlagelement 47 an dem zweiten Hülsenabschnitt 46 der Anlageplatte 42 vorgesehen. Wie zuvor dargelegt, bilden die vom freien Rand des Hülsenabschnitts 24 des Hintergreifteils 22 nach radial aussen abragende Nasen die Gegenrastmittel 26 zum Einrasten in die Rastmittel 48 bzw. 49 entsprechend der Ausrichtung beziehungsweise Stellung des Hintergreifteils 22.

Zwischen dem Schraubenkopf 36 als Abschnitt der Verspanneinrichtung 32 an ihrem dem Hintergreifteil 22 abgewandten Ende und der Anlageplatte 42 ist eine Schraubenfeder als ein zweites Federelement 57 zur Federbeaufschlagung der Spannschraube 33 und somit zur Federbeaufschlagung des mit dieser verbundenen Hintergreifteils 22 vorgesehen.

Das Federelement 52 zwischen dem Hintergreifteil 22 und der Anschlagplatte 42 sowie das vorgenannte zweite Federelement 57 sind als einteilige Federeinrichtung in Form einer Druck-Drehfeder ausgebildet, wobei das unterhalb der Anlageplatte 42 angeordnete, dem Hintergreifteil 22 zugewandte Federelement 52 der einteiligen Federeinrichtung den Drehbereich und das oberhalb der Anlageplatte 42 angeordnete, dem Hintergreifteil abgewandte zweite Federelement 57 den Druckbereich der einteiligen Federeinrichtung ausbildet.

Beim Einführen des Hintergreifteils 22 in die Montageöffnung 15 ist dieses durch die Halteeinrichtung 62 in einer Einführstellung gehalten. Durch Druck auf den Schraubenkopf 36 in Richtung der Anlageplatte 42 wird der Eingriff der Anlageplatte 42 mit dem Hintergreifteil 22 gelöst, so dass das Hintergreifteil 22 automatisch aufgrund der Vorspannung von dem Federelement 52 in seine Hintergreifstellung zum Hintergreifen der Ränder 14 der Montageöffnung 15 verdreht wird. Ein Rand der Einkerbung 64, die das zweite Rastmittel 49 ausbildet, bildet die Anschlagfläche 50 des Anschlagelementes 47 und verhindert ein Überdrehen des Hintergreifteils 22 in eine Stellung relativ zu den Rändern 14 der Montageöffnung 15, welche keine optimale Verspannung der Befestigungsvorrichtung 21 an der Montageschiene 11 ermöglicht beziehungsweise gewährleistet. In dieser Vormontagestellung ist die Befestigungsvorrichtung 21 hemmend an der Montageschiene 11 gehalten, jedoch weiterhin entlang der Montageöffnung 15 für eine Umpositionierung oder Justierung verschiebbar. Um die Befestigungsvorrichtung 21 an der Montageschiene 11 zu verspannen, wird die Spannschraube 33 in das Hintergreifteil 22 eingeschraubt, wobei das Hintergreifteil 22 in Richtung der Anlageplatte 42 versetzt wird und dabei mit den freien Enden der Ränder 14 der Montageöffnung 15 in Anlage kommt. Die Tiefe der zweiten Einkerbung 64 ist derart gewählt, dass ein ausreichend grosser Weg für den axialen Versatz des Hintergreifteils 22 beim Verspannvorgang zur Verfügung steht.

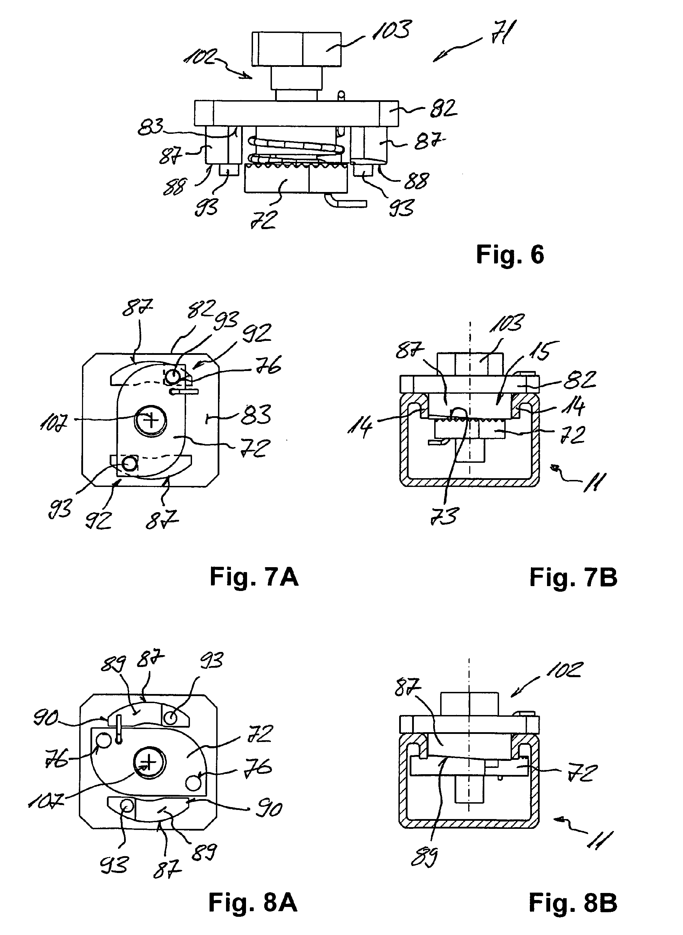

Bei der Befestigungsvorrichtung 71, wie sie in den Figuren 6 bis 8B dargestellt ist, ragen von der Anlageseite 83 der Anlageplatte 82 zwei einander diametral gegenüberliegende Anschlagelemente 87 ab. An den freien Enden dieser Anschlagelemente 87 ist jeweils eine Haltenocke 93 als Teil der Halteeinrichtung 92 zum Halten des Hintergreifteils 72 in einer vorgespannten Stellung vorgesehen. In dem Hintergreifteil 72 sind zwei einander diametral gegenüberliegende Halteausnehmungen 76 vorgesehen, welche zusammen mit den Haltenocken 93 die Halteeinrichtung 92 ausbilden (Fig. 7A, 7B). Zwischen der Halteeinrichtung 92 und einer freien Endseite 90 des Anschlagelementes 87 ist eine Führungskontur 89 für das Hintergreifteil 72 vorgesehen.

Nach dem Einführen des Hintergreifteils 72 in die Montageöffnung 15 ragen die Anschlagelemente 87 in den Innenraum der Montageschiene 11 hinein und die Spannfläche 73 des Hintergreifteils 72 kommt unterhalb der freien Enden der Ränder 14 der Montageöffnung 15 zu liegen. Wird die Spannschraube 103 in Richtung der Anlageplatte 82 versetzt, löst sich die Halteeinrichtung 92 und das Hintergreifteil 72 wird in eine Hintergreifstellung überführt, in welcher die Spannfläche 73 des Hintergreifteils 72 unter die freien Enden der Ränder 14 der Montageöffnung 15 zu liegen kommen (Fig. 8A, 8B).

Am freien Ende der Spannschraube 103 ist eine kreuzförmige Einkerbung 107 vorgesehen, welche diesen Endbereich der Spannschraube 103 bereichsweise aufweitet und somit eine Verliersicherung für das Hintergreifteil 72 ausbildet.

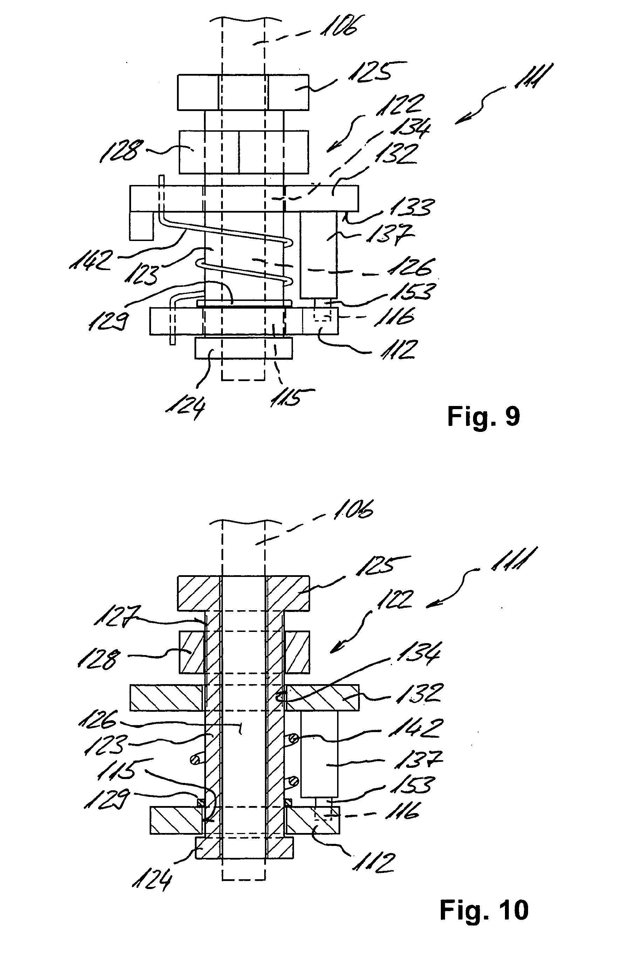

In den Figuren 9 und 10 ist die Befestigungsvorrichtung 111 für die direkte Anordnung eines Stangenelementes 106, wie eine Gewindestange zur Schellenanbindung oder Abhängung eines weiteren Bauteils, an einer Montageschiene 11 dargestellt. Bei der Befestigungsvorrichtung 111 ragt ein stiftförmiges Anschlagelement 137 von der Anlageseite 133 der Anlageplatte 132 ab. An dem freien Ende des Anschlagelementes 137 ist eine Haltenocke 153 vorgesehen, die zum Halten des Hintergreifteils 112 in einer vorgespannten Stellung in eine Halteausnehmung 116 am Hintergreifteil 112 eingreift.

Die Verspanneinrichtung 122 umfasst ein hülsenförmiges Justierelement 123, welches drehbar in der Öffnung 115 des Hintergreifteils 112 und drehbar in der Durchführöffnung 134 der Anlageplatte 132 angeordnet ist. An dem dem Hintergreifteil 112 zugewandten Ende weist das Justierelement 123 einen radial nach aussen abragenden Bund 124 zum Hintergreifen des Hintergreifteils 112 auf. Beabstandet zu dem radial nach aussen abragenden Bund 124 ist an dem dem Hintergreifteil 112 zugewandten Ende des Justierelementes 123 ein Mitnahmemittel 129, hier in Form eines Sprengrings, für das Hintergreifteil 112 an dessen Aussenseite vorgesehen.

An dem dem Hintergreifteil 112 zugewandten Ende weist das Justierelement 123 einen radial nach aussen abragenden Drehmitnahmebund 125 auf, dessen Aussenkontur zur Ausbildung eines Drehmitnahmemittels mit einer Sechskantkontur versehen ist. Das hülsenförmige Justierelement 123 weist eine durchgehende Bohrung als Aufnahme 126 für das Stangenelement 106 auf. Die Aufnahme 126 ist in diesem Ausführungsbeispiel über deren gesamte Längserstreckung mit einem Innengewinde versehen, in welches ein Aussengewinde des Stangenelementes 106 aufgenommen wird. Unterhalb des Drehmitnahmebundes 125, in Richtung des dem Hintergreifteil 112 zugewandten Ende des Justierelementes 123 ist aussenseitig ein Bereich mit einem Aussengewinde 127 vorgesehen, an dem eine Spannmutter 128 angeordnet ist.

Über einen direkt auf das Justierelement 123 oder indirekt über das in der Aufnahme 126 angeordnete Stangenelement 106 auf das Justierelement 123 ausgeübten Druck wird das Justierelement 123 in Richtung der Anlageplatte 132 versetzt, wobei das Hintergreifteil 112 von dem Mitnahmemittel 129 mitgenommen und die von der Haltenocke 153 und der Halteausnehmung 116 gebildete Halteeinrichtung 152 gelöst wird. Anschliessend wird das Hintergreifteil 112 von dem an der Anlageplatte 132 und dem Hintergreifteil 112 festgelegten Federelement 142 in seine Hintergreifstellung überführt, bis das Hintergreifteil 112 an einer Aussenseite des stiftförmigen Anschlagelementes 137 anschlägt, welche in der korrekten Ausrichtung des Hintergreifteils 112 eine Anschlagfläche für dieses bildet. Zum Verspannen der Befestigungsvorrichtung 111 wird die Spannmutter 128 mit der Anlageplatte 132 in Anlage gebracht und für eine ausreichende Verspannung der Befestigungsvorrichtung 111 entsprechend weitergedreht.

Alternativ zu einer Anordnung des Stangenelementes 106 in der Aufnahme 126 kann ein zusätzliches Element mit einer weiteren Aufnahme für das Stangenelement 106 an dem Justierelement 123 vorgesehen werden. Das zusätzliche Element weist beispielsweise einen mit einem Aussengewinde versehenen Nocken auf, der in die Aufnahme 126 des Justierelementes 123 einschraubbar ist, womit eine axiale Versetzbarkeit des zusätzlichen Elementes relativ zum Justierelement 123 beispielsweise für eine Feinjustierung eines an der Befestigungsvorrichtung festgelegten Stangenelementes ermöglicht wird.

Weiter kann die Verspanneinrichtung 122 auch von einer Spannschraube gebildet sein, die mit dem Hintergreifteil 112 verbunden ist und an ihrem dem Hintergreifteil 112 abgewandten Ende mit einer Sackbohrung zur Ausbildung einer Aufnahme für ein Stangenelementes versehen ist.

## Patentansprüche

1. Befestigungsvorrichtung zur Anordnung an einer Montageschiene (11) mit einem Hintergreifteil (22; 72; 132) zum Einführen in die Montageöffnung (15) und Hintergreifen von Rändern (14) der Montageöffnung (15) der Montageschiene (11),
mit einer mit dem Hintergreifteil (22; 72; 132) zusammenwirkenden, eine Längsachse aufweisenden Verspanneinrichtung (32; 102; 122) zum Verspannen der Befestigungsvorrichtung (21; 71; 111) an der Montageschiene (11),
mit einer Anlageplatte (42; 82; 132) zur aussenseitigen Anlage an der Montageschiene (11), die eine Durchführöffnung (44; 134) für zumindest einen Teil der Verspanneinrichtung (32; 102; 122) aufweist,
mit einem zwischen der Anlageplatte (42; 82; 132) und dem Hintergreifteil (22; 72; 132) angeordneten Federelement (52) zur Vorspannung des Hintergreifteils (22; 72; 132) in eine in Bezug auf die Längsachse (34) der Verspanneinrichtung (32; 102; 122) radiale Richtung, und
mit einer Halteeinrichtung (62; 92; 152) zwischen dem Hintergreifteil (22; 72; 132) und der Anlageplatte (42; 82; 132) zum Halten des Hintergreifteils (22; 72; 132) in der vorgespannten Stellung, wobei beim Lösen der Halteeinrichtung (62; 92; 152) das Hintergreifteil (22; 72; 132) von dem Federelement (52) aus der Einführstellung in eine die Ränder (14) der Montageöffnung (15) hintergreifende Hintergreifstellung überführbar ist, **dadurch gekennzeichnet, dass**
an der Anlageplatte (42; 82; 132) zumindest ein Anschlagelement (47; 87; 137) mit einer Anschlagsfläche (50) zur Begrenzung der Verdrehbarkeit des Hintergreifteils (22; 72; 132) vorgesehen ist.

2. Befestigungsvorrichtung nach Anspruch 1, **dadurch gekennzeichnet, dass** das zumindest eine Anschlagelement (47; 87; 137) von der dem Hintergreifteil (22; 72; 132) zugewandten Anlageseite (43; 83; 133) der Anlageplatte (42; 82; 132) abragt.

3. Befestigungsvorrichtung nach Anspruch 1 oder 2, **dadurch gekennzeichnet, dass** die Halteeinrichtung (92; 152) für das Hintergreifteil (72; 132) an dem Anschlagelement (87; 137) vorgesehen ist.

4. Befestigungsvorrichtung nach Anspruch 3, **dadurch gekennzeichnet, dass** zwischen der Halteeinrichtung (92) und einer freien Endseite (90) des Anschlagelementes (87) eine Führungskontur (89) für das Hintergreifteil (72) vorgesehen ist.

5. Befestigungsvorrichtung nach einem der Ansprüche 1 bis 4, **dadurch gekennzeichnet, dass** an einer der Anlageplatte zugewandten Seite des Hintergreifteils (22) ein erster, zylinderförmiger Hülsenabschnitt (24) und an einer dem Hintergreifteil (22) zugewandten Anlageseite (43) der Anlageplatte (42) ein zweiter, die Durchführöffnung (44) umgebender zylinderförmiger Hülsenabschnitt (46) vorgesehen ist, wobei der erste Hülsenabschnitt (24) und der zweite Hülsenabschnitt (46) teleskopierbar zueinander angeordnet sind und wobei das zumindest eine Anschlagelement (47) am zweiten Hülsenabschnitt (46) der Anlageplatte (42) vorgesehen ist.

6. Befestigungsvorrichtung nach einem der Ansprüche 1 bis 5, **dadurch gekennzeichnet, dass** das Anschlagelement (47) zumindest ein erstes Rastmittel (48) zur Ausrichtung des Hintergreifteils (22) in seiner Einführstellung und zumindest ein zweites Rastmittel (49) zur Ausrichtung des Hintergreifteils (22) in seiner Hintergreifstellung umfasst, wobei an dem Hintergreifteil (22) zumindest ein Gegenrastmittel (26) zum Einrasten in die Rastmittel (48, 49) entsprechend der Ausrichtung des Hintergreifteils (22) vorgesehen ist.

7. Befestigungsvorrichtung nach einem der Ansprüche 1 bis 6, **dadurch gekennzeichnet, dass** ein zweites Federelement (57) zwischen einem Abschnitt der Verspanneinrichtung (32) an ihrem dem Hintergreifteil (22) abgewandten Ende und der Anlageplatte (42) zur Federbeaufschlagung eines mit dem Hintergreifteil (22) verbundenen Teils der Verspanneinrichtung (32) in Richtung des dem Hintergreifteil (22) abgewandten Endes vorgesehen ist.

8. Befestigungsvorrichtung nach einem der Ansprüche 1 bis 7, **dadurch gekennzeichnet, dass** das dem Hintergreifteil (72) zugewandte Ende eines mit dem Hintergreifteil (72) verbundenen Teils der Verspanneinrichtung (102) mit einer Verliersicherung für das Hintergreifteil (72) versehen ist.

9. Befestigungsvorrichtung nach einem der Ansprüche 1 bis 8, **dadurch gekennzeichnet, dass** die Verspanneinrichtung (122) an ihrem dem Hintergreifteil (112) abgewandten Ende eine Aufnahme (126) für ein Stangenelement aufweist.

10. Befestigungsvorrichtung nach Anspruch 9, **dadurch gekennzeichnet, dass** die Verspanneinrichtung (122) an ihrem dem Hintergreifteil (112) abgewandten Ende ein Drehmitnahmemittel zur axialen Justierung eines in der Aufnahme (126) aufgenommenen Stangenelementes (106) aufweist.

## Claims

1. Fastening device designed to be placed on a mounting rail (11), comprising a rear-engagement part (22; 72; 132) designed to be inserted into the mounting opening (15) and to engage behind edges (14) of the mounting opening (15) of the mounting rail (11),
a clamping device (32; 102; 122) having a longitudinal axis and cooperating with the rear-engagement part (22; 72; 132), designed to clamp the fastening device (21; 71; 111) to the mounting rail (11),
a bearing plate (42; 82; 132) designed to bear against the outside of the mounting rail (11) and having a through opening (44; 134) for at least part of the clamping device (32; 102; 122),
a spring element (52) arranged between the bearing plate (42; 82; 132) and the rear-engagement part (22; 72; 132), designed to preload the rear-engagement part (22; 72; 132) in a radial direction in relation to the longitudinal axis (34) of the clamping device (32; 102; 122), and
a holding device (62; 92; 152) between the rear-engagement part (22; 72; 132) and the bearing plate (42; 82; 132), designed to hold the rear-engagement part (22; 72; 132) in the preloaded position, wherein the rear-engagement part (22; 72; 132) can be moved from the insertion position into a rear-engagement position in which it engages behind the edges (14) of the mounting opening (15) by the spring element (52) when the holding device (62; 92; 152) is released, **characterised in that**
at least one stop element (47; 87; 137) comprising a stop face (50) designed to limit the ability of the rear-engagement part (22; 72; 132) to rotate is provided on the bearing plate (42; 82; 132).

2. Fastening device according to claim 1, **characterised in that** the at least one stop element (47; 87; 137) projects from the bearing face (43; 83; 133) of the bearing plate (42; 82; 132) directed towards the rear-engagement part (22; 72; 132).

3. Fastening device according to claim 1 or claim 2, **characterised in that** the holding device (92; 152) for the rear-engagement part (72; 132) is provided on the stop element (87; 137).

4. Fastening device according to claim 3, **characterised in that** a guide contour (89) for the rear-engagement part (72) is provided between the holding device (92) and a free end face (90) of the stop element (87).

5. Fastening device according to one of claims 1 to 4, **characterised in that** a first cylindrical sleeve portion (24) is provided on a side of the rear-engagement part (22) directed towards the bearing plate and a second cylindrical sleeve portion (46) surrounding the through opening (44) is provided on a bearing face (43) of the bearing plate (42) directed towards the rear-engagement part (22), the first sleeve portion (24) and the second sleeve portion (46) being mutually telescopic and the at least one stop element (47) being provided on the second sleeve portion (46) of the bearing plate (42).

6. Fastening device according to one of claims 1 to 5, **characterised in that** the stop element (47) includes at least a first locking means (48) designed to align the rear-engagement part (22) in its insertion position and at least a second locking means (49) designed to align the rear-engagement part (22) in its rear-engagement position, at least one counter-locking means (26) designed to snap into the locking means (48, 49) in accordance with the alignment of the rear-engagement part (22) being provided on the rear-engagement part (22).

7. Fastening device according to one of claims 1 to 6, **characterised in that** a second spring element (57) is provided between the end of a portion of the clamping device (32) directed away from the rear-engagement part (22) and the bearing plate (42), designed to spring-load part of the clamping device (32) connected to the rear-engagement part (22) in the direction of the end directed away from the rear-engagement part (22).

8. Fastening device according to one of claims 1 to 7, **characterised in that** the end of part of the clamping device (102) connected to the rear-engagement part (72) and directed towards the rear-engagement part (72) is provided with a captive means for the rear-engagement part (72).

9. Fastening device according to one of claims 1 to 8, **characterised in that** the clamping device (122) is provided at its end directed away from the rear-engagement part (112) with a receiver (126) for a rod element.

10. Fastening device according to claim 9, **characterised in that** the clamping device (122) is provided at its end directed away from the rear-engagement part (112) with a rotary driving means for the axial adjustment of a rod element (106) received in the receiver (126).

## Revendications

1. Dispositif de fixation destiné à être disposé sur un rail de montage (11) comprenant une partie de préhension par l'arrière (22 ; 72 ; 132) destinée à être guidée dans l'orifice de montage (15) et destinée à venir en prise par l'arrière avec des bords (14) de l'orifice de montage (15) du rail de montage (11),
comprenant un système de serrage (32 ; 102 ; 122) coopérant avec la partie de préhension par l'arrière (22 ; 72 ; 132), présentant un axe longitudinal et servant à serrer le dispositif de fixation (21 ; 71 ; 111) sur le rail de montage (11),
comprenant une plaque d'appui (42 ; 82 ; 132) destinée à venir en appui côté extérieur sur le rail de montage (11), laquelle plaque d'appui présente un orifice de passage (44 ; 134) pour au moins une partie du système de serrage (32 ; 102 ; 122),
comprenant un élément formant ressort (52) disposé entre la plaque d'appui (42 ; 82 ; 132) et la partie de préhension par l'arrière (22 ; 72 ; 132), servant à précontraindre la partie de préhension par l'arrière (22 ; 72 ; 132) dans une direction radiale par rapport à l'axe longitudinal (34) du système de serrage (32 ; 102 ; 122), et
comprenant un système de maintien (62 ; 92 ; 152) entre la partie de préhension par l'arrière (22 ; 72 ; 132) et la plaque d'appui (42 ; 82 ; 132) servant à maintenir la partie de préhension par l'arrière (22 ; 72 ; 132) dans la position précontrainte, la partie de préhension par l'arrière (22 ; 72 ; 132) pouvant être amenée par l'élément formant ressort (52) à passer d'une position d'introduction dans une position de préhension par l'arrière venant en prise par l'arrière avec les bords (14) de l'orifice de montage (15) lors du desserrage du système de maintien (62 ; 92 ; 152),
**caractérisé en ce**
**qu'**au moins un élément de butée (47 ; 87 ; 137) doté d'une surface de butée (50) est prévu pour limiter la capacité de rotation de la partie de préhension par l'arrière (22 ; 72 ; 132) au niveau de la plaque d'appui (42 ; 82 ; 132).

2. Dispositif de fixation selon la revendication 1, **caractérisé en ce qu'**au moins un élément de butée (47 ; 87 ; 137) dépasse du côté d'appui (43 ; 83 ; 133) de la plaque d'appui (42 ; 82 ; 132), tourné vers la partie de préhension par l'arrière (22 ; 72 ; 132).

3. Dispositif de fixation selon la revendication 1 ou 2, **caractérisé en ce que** le système de maintien (92 ; 152) pour la partie de préhension par l'arrière (72 ; 132) est prévu au niveau de l'élément de butée (87 ; 137).

4. Dispositif de fixation selon la revendication 3, **caractérisé en ce qu'**un contour de guidage (89) pour la partie de préhension par l'arrière (72) est prévu entre le système de maintien (92) et un côté d'extrémité (90) libre de l'élément de butée (87).

5. Dispositif de fixation selon l'une quelconque des revendications 1 à 4, **caractérisé en ce qu'**une première section de douille (24) cylindrique est prévue au niveau d'un côté de la partie de préhension par l'arrière (22), tourné vers la plaque d'appui, et **en ce qu'**une deuxième section de douille (46) cylindrique entourant l'orifice de passage (44) est prévue au niveau d'un côté d'appui (43) de la plaque d'appui (42), tourné vers la partie de préhension par l'arrière (22), la première section de douille (24) et la deuxième section de souille (46) étant disposées l'une par rapport à l'autre de manière télescopique et ledit au moins un élément de butée (47) étant prévu au niveau de la deuxième section de douille (46) de la plaque d'appui (42).

6. Dispositif de fixation selon l'une quelconque des revendications 1 à 5, **caractérisé en ce que** l'élément de butée (47) comprend au moins un premier moyen d'enclenchement (48) servant à diriger la partie de préhension par l'arrière (22) dans sa position d'introduction ainsi qu'au moins un deuxième élément d'enclenchement (49) servant à diriger la partie de préhension par l'arrière (22) dans sa position de préhension par l'arrière, et **en ce qu'**au moins un moyen d'enclenchement complémentaire (26) destiné à s'enclencher dans les moyens d'enclenchement (48, 49) est prévu de manière à correspondre à la direction de la partie de préhension par l'arrière (22) au niveau de la partie de préhension par l'arrière (22).

7. Dispositif de fixation selon l'une quelconque des revendications 1 à 6, **caractérisé en ce qu'**un deuxième élément formant ressort (57) est prévu entre une section du système de serrage (32) au niveau de son extrémité opposée à la partie de préhension par l'arrière (22) et la plaque d'appui (42) servant à soumettre à l'action d'un ressort une partie, reliée à la partie de préhension par l'arrière (22), du système de serrage (32) dans la direction de l'extrémité opposée à la partie de préhension par l'arrière (22).

8. Dispositif de fixation selon l'une quelconque des revendications 1 à 7, **caractérisé en ce que** l'extrémité d'une partie du système de serrage (102) reliée à la partie de préhension par l'arrière (72), laquelle extrémité est tournée vers la partie de préhension par l'arrière (72), est pourvue d'une sécurité anti-perte pour la partie de préhension par l'arrière (72).

9. Dispositif de fixation selon l'une quelconque des revendications 1 à 8, **caractérisé en ce que** le système de serrage (122) présente au niveau de son extrémité opposée à la partie de préhension par l'arrière (112), un logement (126) pour un élément de barre.

10. Dispositif de fixation selon la revendication 9, **caractérisé en ce que** le système de serrage (122) présente au niveau de son extrémité opposée à la partie de préhension par l'arrière (112), un moyen d'entraînement en rotation servant à ajuster axialement un élément de barre (106) logé dans le logement (126).
